(19) Europäisches Patentamt / European Patent Office / Office européen des brevets

(11) **EP 4 478 816 A1**

(12) **EUROPEAN PATENT APPLICATION**
published in accordance with Art. 153(4) EPC

(43) Date of publication:
**18.12.2024 Bulletin 2024/51**

(21) Application number: **22925951.0**

(22) Date of filing: **10.02.2022**

(51) International Patent Classification (IPC):
**H04W 72/12** *(2023.01)* **H04W 72/04** *(2023.01)*

(52) Cooperative Patent Classification (CPC):
**H04W 72/04; H04W 72/12**

(86) International application number:
**PCT/JP2022/005512**

(87) International publication number:
**WO 2023/152930 (17.08.2023 Gazette 2023/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
  **Tokyo 100-6150 (JP)**
• **HARADA, Hiroki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, BASE STATION AND COMMUNICATION METHOD**

(57) A terminal includes: a reception unit configured to receive, in a first cell, a downlink control channel including information for scheduling a signal of a second cell that is different from the first cell; and a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

FIG.4

**Description**

FIELD OF THE INVENTION

The present invention relates to a terminal, a base station and a communication method in a wireless communication system.

BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

NR release 17 discusses using a higher frequency band than a conventional release (e.g., Non-Patent Document 2). For example, applicable numerologies including subcarrier spacings, channel bandwidths, etc., physical layer design, and possible failures in actual wireless communication in the 52.6 GHz to 71 GHz frequency band have been discussed.

In addition, in NR, a function of cross-carrier scheduling is being discussed in which scheduling is performed between different carriers.

Citation List

Non-Patent Document

Non-Patent Document 1: 3GPP TS 38.300 V16.6.0 (2021-06)
Non-Patent Document 2: 3GPP TS 38.306 V16.5.0 (2021-06)

SUMMARY OF THE INVENTION

TECHNICAL PROBLEM

There is a problem that technical specifications for applying the wireless communication system to high frequency bands are not specified. For example, there is a problem that whether or not a terminal is to support the cross-carrier scheduling in the high frequency band between carriers in which there is a difference between frame boundaries is not specified.

The present invention has been made in view of the above points and is intended to apply the wireless communication system to high frequency bands.

SOLUTION TO PROBLEM

According to the disclosed technique, a terminal is provided. The terminal includes: a reception unit configured to receive, in a first cell, a downlink control channel including information for scheduling a signal of a second cell that is different from the first cell; and a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

ADVANTAGEOUS EFFECTS OF INVENTION

According to the disclosed technique, a technique is provided which enables a radio communication system to be applied to a high frequency band.

BRIEF DESCRIPTION OF THE DRAWINGS

[Fig. 1] is a drawing for describing a wireless communication system related to an embodiment of the present invention.

[Fig. 2] is a drawing illustrating a configuration example of a wireless communication system related to an embodiment of the present invention.

[Fig. 3] is a drawing illustrating an example of a frequency range related to an embodiment of the present invention.

[Fig. 4] is a drawing illustrating an example of cross-carrier scheduling.

[Fig. 5] is a first drawing illustrating an example of a case in which there is a difference between frame boundaries in cells.

[Fig. 6] is a second drawing illustrating an example of a case in which there is a difference between frame boundaries in cells.

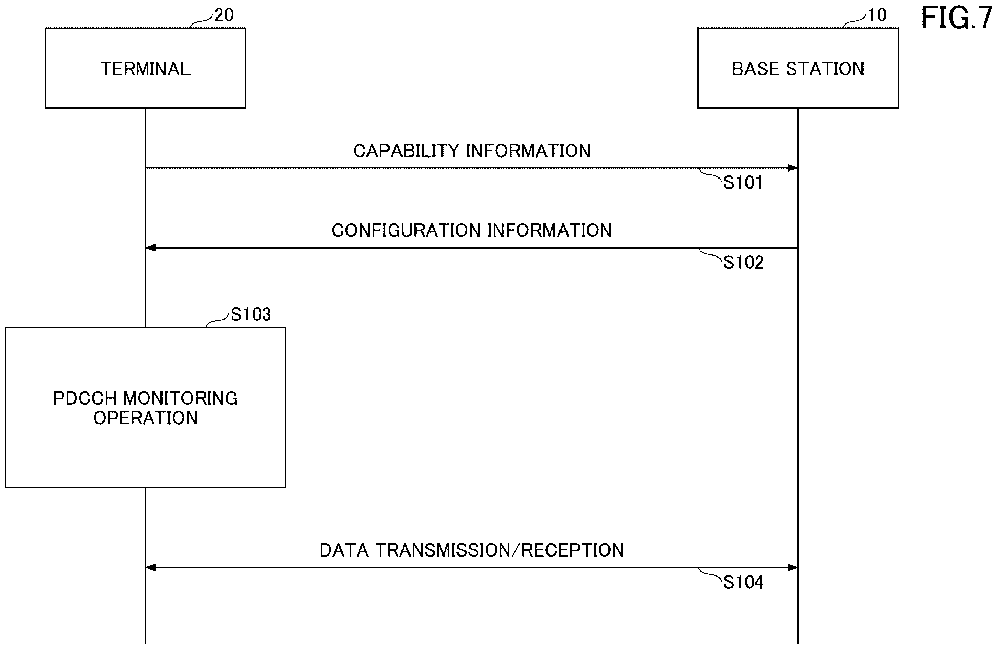

[Fig. 7] is a drawing illustrating an example of a basic operation of a system.

[Fig. 8] is a drawing illustrating an example of the conventional RRC parameters.

[Fig. 9] is a drawing illustrating an example of RRC parameters related to an embodiment 2-1 of the present invention.

[Fig. 10] is a drawing illustrating an example of a functional structure of a base station related to an embodiment of the present invention.

[Fig. 11] is a drawing illustrating an example of a functional structure of a terminal related to an embodiment of the present invention.

[Fig. 12] is a drawing illustrating an example of a hardware structure of the base station or the terminal related to an embodiment of the present invention.

[Fig. 13] is a drawing illustrating an example of a structure of a vehicle related to an embodiment of the present invention.

DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

(System configuration)

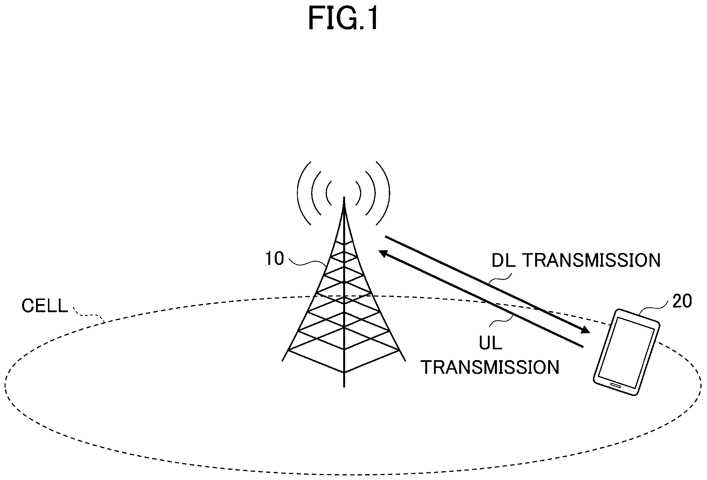

Fig. 1 is a drawing illustrating a wireless communication system related to an embodiment of the present invention.

As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

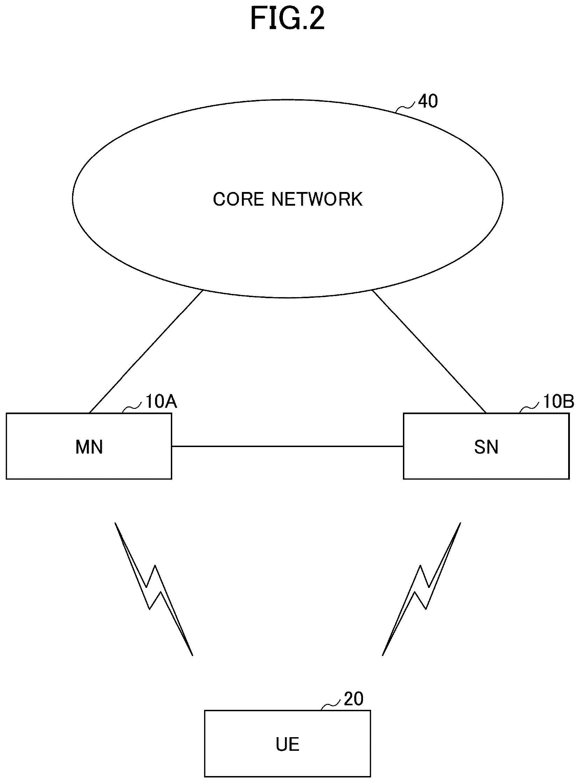

Fig. 2 shows an example of a configuration of a wireless communication system in a case where NR-DC (NR-Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 communicates with both the base station 10A and the base station 10B.

A cell group provided by the base station 10A serving as an MN is called an MCG (Master Cell Group), and a cell group provided by the base station 10B serving as an SN is called an SCG (Secondary Cell Group). In addition, a PCell in the MCG (Master Cell Group) may be referred to as a PSCell. Operations in an embodiment of the present invention may be performed in any one of the configurations of Fig. 1 and Fig. 2. In addition, the DC may be an NR-NR DC, an NR-LTE DC, or a DC other than these DCs.

In addition, the DC may be referred to as "carrier aggregation" in a case where transmission and reception are performed by multiplexing CCs among a plurality of base stations. In addition, in this specification, a CC and a cell may be defined as the same thing.

In a wireless communication system according to an embodiment of the present invention, in a case where an unlicensed band is used, LBT (Listen Before Talk) may be executed. The base station 10 or the terminal 20 performs transmission in a case where the LBT result is idle, and does not perform transmission in a case where the LBT result is busy.

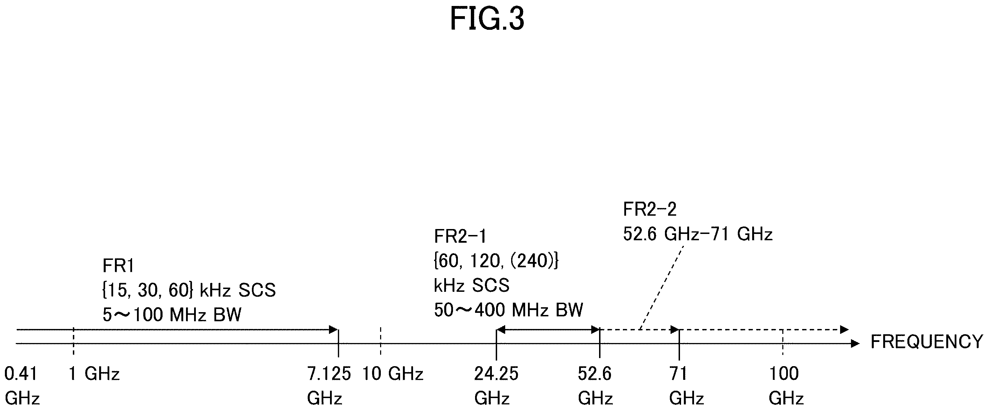

Fig. 3 is a drawing illustrating an example of a frequency range related to an embodiment of the present invention. In the 3GPP release 17 NR specifications, for example, an operation in a frequency band of 52. 6 GHz or higher is being discussed. Note that, as shown in Fig. 3, FR (Frequency range) 1 in which current operation is defined is a frequency band from 410 MHz to 7. 125 GHz, SCS (Sub carrier spacing) is 15, 30, or 60 kHz, and bandwidth is from 5 MHz to 100 MHz. FR2-1 is a frequency band from 24.25 GHz to 52.6 GHz, SCS is 60kHz, 120 kHz or 240 kHz, and the bandwidth is from 50 MHz to 400 MHz. In addition, a newly deployed frequency band FR2-2 is a frequency band from 52.6 GHz to 71 GHz.

Up to 64 SSB beams may be supported in the licensed bands and unlicensed bands in the newly deployed frequency band FR2-2. Also, 120 kHz SCS to be applied to SSB and 120 kHz SCS to be applied to initial access signals and channels, may be supported in the initial BWP (Bandwidth Part).

In addition to the 120 kHz SCS, SSB with 480 kHz SCS may be supported. Initial access supporting CORESET (Control Resource Set)#0/Type0-PDCCH included in the MIB, may be performed by the SSB. However, there may be the following limitations. For example, entry numbers of the synchronization raster may be limited. In addition, only CORESET#0/Type0-PDCCH with 480 kHz SCS may be supported in a case of SSB with 480 kHz SCS. Furthermore, SSB-CORESET multiplexing pattern 1 (SS/PBCH block and CORESET multiplexing pattern 1) may be prioritized.

Uniquely identifying the ANR (Automatic Neighbour Relation) and PCI (Physical Cell Identity) for detecting SSB with 120 kHz SCS, 480 kHz SCS, and 960 kHz SCS may be supported. In addition, CORESET#0/Type0-PDCCH included in MIB of SSB with 120 kHz SCS, 480 kHz SCS, and 960 kHz SCS, may be supported. In addition, one SCS for CORESET#0/Type0-PDCCH may be supported per SCS for SSB. For example, with respect to {SCS of SSB, SCS of CORESET#0/Type0-PDCCH}, {120,120}, {480,480}, and {960,960} may be supported.

(Cross-carrier scheduling)

Next, the cross-carrier scheduling function that is being discussed in NR will be described. The cross-carrier scheduling function is a function of performing scheduling between different carriers.

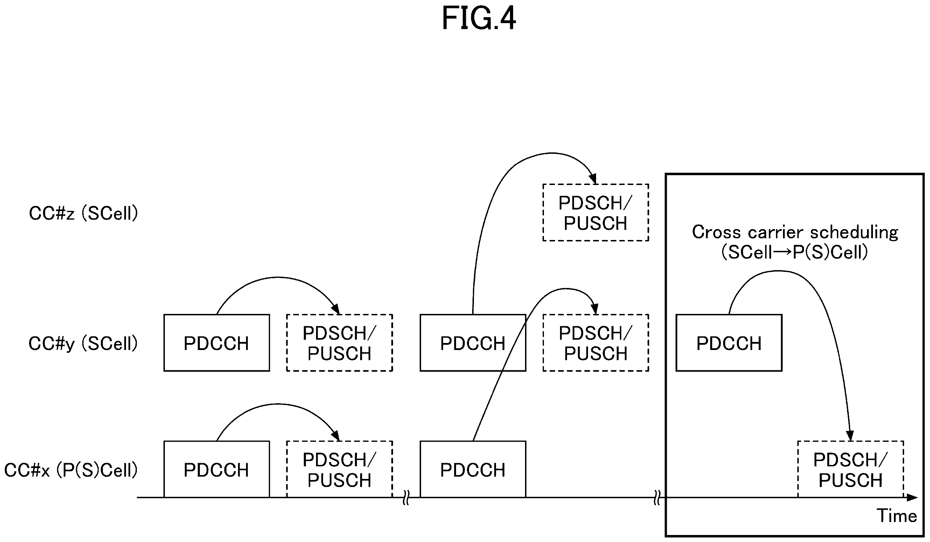

Fig. 4 is a drawing illustrating an example of cross-carrier scheduling. In an example illustrated in Fig. 4, CC#x(P(S)Cell), CC#y(SCell), and CC#z(SCell) are illustrated. The left side of Fig. 4 is an example in which the scheduling by PDCCH is respectively performed in CC#x and CC#y, which is different from the cross-carrier scheduling. It is to be noted that the PDCCH is an example of a downlink control channel, and the DCI that is transmitted via PDCCH is an example of control information.

The center and the right side of Fig. 4 illustrate the cross-carrier scheduling. Specifically, in an example of the center, scheduling from CC#x(P(S)Cell) to CC#y(SCell) and scheduling from CC#y(SCell) to CC#z(SCell) are illustrated.

In an example of the right side of Fig. 4, scheduling is performed from CC#y(SCell) to CC#x(P(S)Cell). In this example, the terminal 20 receives PDCCH (DCI) in CC#y(SCell), and performs data reception or data transmission in CC#x(P(S)Cell) according to information of the DCI.

In addition, there is a case in which CA can be performed between CCs whose frame boundaries are different, and, in this case, the difference between the frame boundaries of the CCs can be indicated from the base station 10 to the terminal 20 as a slot offset value (ca-SlotOffset). The terminal 20 can determine the amount of timing difference between CCs according to the indication of the difference.

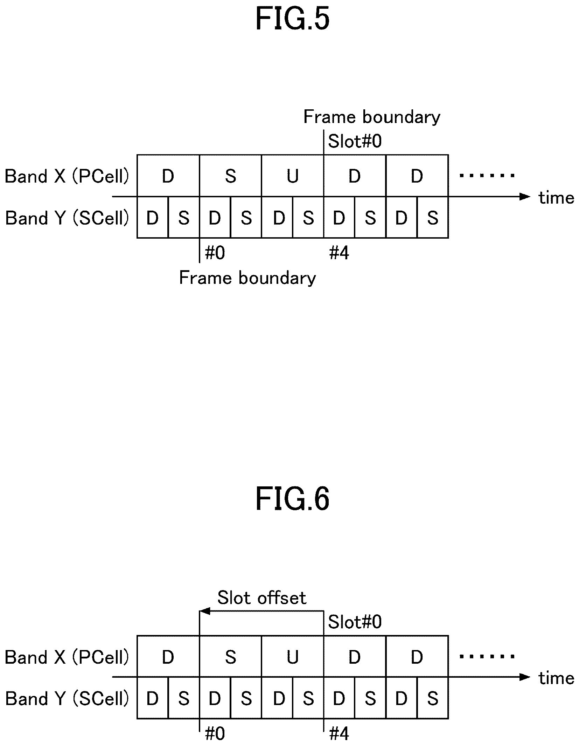

Fig. 5 is a first drawing illustrating an example of a case in which there is a difference between frame boundaries in cells. Fig. 6 is a second drawing illustrating an example of a case in which there is a difference between frame boundaries in cells. Specifically, Fig. 5 illustrates an example of a case in which there is a difference between frame boundaries of PCell and SCell. In addition, Fig. 6 illustrates a slot offset in a case of Fig. 5.

(Basic operation example)

A basic operation example that is applied to both an embodiment 1 and an embodiment 2 will be described by referring to Fig. 6. In S101, the terminal 20 transmits capability information (UE capability) to the base station 10. This capability information may include, for example, information indicating whether or not functions described in an embodiment 1 or an embodiment 2 described below are to be supported.

In S102, the base station 10 transmits configuration information to the terminal 20. This configuration information is, for example, information for configuring the cross-carrier scheduling between CCs whose frame boundaries are different. In addition, an offset, or the like, indicating the difference between the frame boundaries of the CCs may be indicated to each of the CCs by using this configuration information or another configuration information.

In S103, the terminal 20 performs PDCCH monitoring in SCell and PCell/PSCell.

In a case where PDCCH (DCI) directed to the terminal 20 is received according to the monitoring result of S103, the terminal 20 performs data transmission/data reception according to the DCI in S104.

(Problem of conventional technique)

In NR, it is agreed that a terminal that supports cross-carrier scheduling between carriers of different numerologies in a high frequency band such as FR2-2 and a terminal that does not support cross-carrier scheduling are to be specified according to the terminal capability.

Hereinafter, a carrier (cell) in which PDCCH (DCI) is transmitted at the time of scheduling is referred to as a "scheduling cell (first cell)", and a carrier (cell) in which a scheduled signal/channel (for example, PDSCH, PUSCH, or the like) is transmitted is referred to as a "scheduled cell (second cell)".

For example, the capability information may be specified as a function of $|\mu PDCCH-\mu PDSCH|$. Here, $\mu PDCCH$ is a numerology indicating the subcarrier spacing of a carrier in which PDCCH is transmitted (an example of the scheduling cell). In addition, $\mu PDSCH$ is a numerology indicating the subcarrier spacing of a carrier in which PDSCH is transmitted (an example of the scheduled cell). Therefore, $|\mu PDCCH-\mu PDSCH|$ indicates the numerology difference between the carriers.

In addition, in a case where the cross-carrier scheduling is performed, the slot offset value (ca-SlotOffset) is configured in a manner in which the frame timing gap between the scheduling cell and the scheduled cell that have different frame boundaries is taken into account.

Specifically, in a case where the slot offset value (ca-SlotOffset) is configured for at least one of the scheduling cell or the scheduled cell, the slot position at which PDSCH is located is specified by the following Ks.

[Math 1]

$$K_S = \left\lceil n \cdot \frac{2^{\mu_{PDSCH}}}{2^{\mu_{PDCCH}}} \right\rceil + K_0 + \left\lceil \left( \frac{N^{CA}_{slot,offset,PDCCH}}{2^{\mu_{offset,PDCCH}}} - \frac{N^{CA}_{slot,offset,PDSCH}}{2^{\mu_{offset,PDSCH}}} \right) \cdot 2^{\mu_{PDSCH}} \right\rceil$$

In a case other than the above case, the slot position at which PDSCH is located is specified by the following Ks.

[Math 2]

$$K_s = \left\lceil n \cdot \frac{2^{\mu_{PDSCH}}}{2^{\mu_{PDCCH}}} \right\rceil + K_0$$

In the above-described formulas, n is a value indicating the slot position of the scheduling DCI. Ko is a value indicating the reference slot offset that is specified based on the numerology of PDSCH. $\mu_{PDSCH}$ and $\mu_{PDCCH}$ are numerologies indicating the subcarrier spacings that are respectively configured to PDSCH and PDCCH.

As described above, the cross-carrier scheduling between CCs that have different frame boundaries can be achieved by causing the slot offset value (ca-SlotOffset) to be configured. It is to be noted that a case in which a signal/channel other than PDSCH is scheduled may be achieved in the same way.

Next, the RRC parameters related to the conventional cross-carrier scheduling will be described.

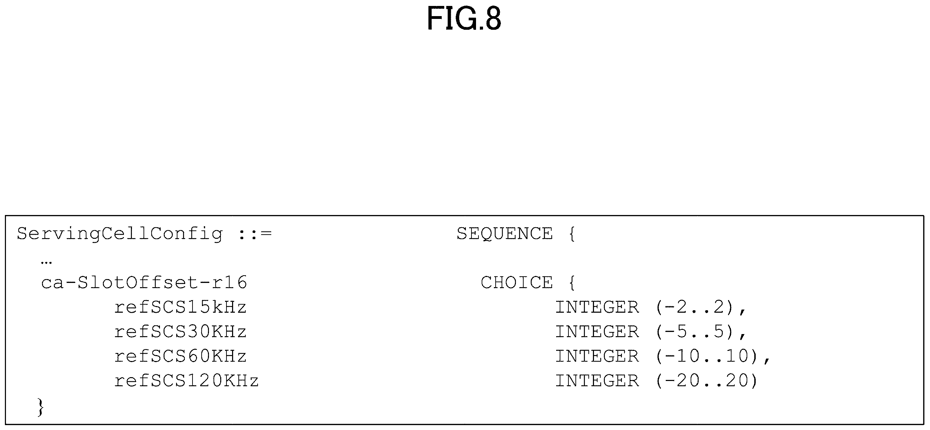

Fig. 8 is a drawing illustrating an example of the conventional RRC parameters. Specifically, the slot offset value (ca-SlotOffset) included in the RRC parameter (ServingCellConfig) is specified for each subcarrier spacing. For example, in a case where the subcarrier spacing is 15 kHz, the terminal 20 assumes that the slot offset value (ca-SlotOffset) is to be selected by the base station 10 from among the integer values from -2 to 2.

However, the slot offset value (ca-SlotOffset) is specified only for the subcarrier spacings that are equal to or less than 120 kHz.

Therefore, the slot offset value (ca-SlotOffset) is not specified for the high frequency band (480 kHz subcarrier spacing or 960 kHz subcarrier spacing). As a result, there is a problem that whether or not the terminal 20 supports the cross-carrier scheduling between carriers whose frame boundaries are different is unclear for the high frequency band (480 kHz subcarrier spacing or 960 kHz subcarrier spacing).

(Overview of embodiment)

Accordingly, in an embodiment of the present invention, an example will be described in which whether or not the cross-carrier scheduling between carriers whose frame boundaries are different is supported is to be clarified. Hereinafter, an embodiment 1 and an embodiment 2 will be described as specific examples.

(Embodiment 1)

In this embodiment, a case will be described in which supporting of the cross-carrier scheduling in CCs whose frame boundaries are different is specified.

(Embodiment 1-1)

The terminal 20 is not required to support the cross-carrier scheduling including a cell of 480 kHz subcarrier spacing and/or 960 kHz subcarrier spacing in the inter-band CA (inter-band CA in which slots are arranged and SFNs (System Frame Number) are partially arranged) between carriers whose frame boundaries are different.

<Option 1>

Here, "not to support" may specifically mean one of the following options.

<Option 1-1>

The slot offset value (Ca-SlotOffset) in not configured for the subcarrier spacing of 480 kHz and/or 960 kHz. In this case, the terminal 20 uses an offset value for a case in which the slot offset value (Ca-SlotOffset) is not configured.

<Option 1-2>

The frame boundaries of the scheduling cell and the scheduled cell are required to be aligned in a case where the scheduling cell is configured with the 480/960 kHz subcarrier spacing.

<Option 1-3>

In a case where the scheduling cell is configured with the 480/960 kHz subcarrier spacing and where a parameter (cif-InSchedulingCell) that indicates a carrier indicator of the scheduling cell is configured as x, the terminal 20 assumes that the scheduling DCI whose carrier indicator is equal to x is to be not indicated. In this case, the scheduling cell is limited to a cell whose subcarrier spacing is a subcarrier spacing other than the 480/960 kHz subcarrier spacing.

(Embodiment 1-2)

The terminal 20 is not required to support the cross-carrier scheduling including a cell of FR2-2 (or, a cell in a frequency range between 52.6 GHz and 71 GHz) in the inter-band CA (inter-band CA in which slots are arranged and SFNs are partially arranged) between carriers whose frame boundaries are different.

<Option 2-1>

The frame boundaries of the scheduled cell and the scheduling cell are required to be aligned in a case where the scheduling cell is included in FR2-2.

<Option 2-2>

In a case where the scheduling cell is included in FR2-2 and where a parameter (cif-InSchedulingCell) that indicates a carrier indicator of the scheduling cell is configured as x, the terminal 20 assumes that the scheduling DCI whose carrier indicator is equal to x is to be not indicated. In this case, the scheduling cell is limited to a cell that belongs to a frequency range other than FR2-2.

(Embodiment 1-3)

The terminal 20 may support the cross-carrier scheduling including a cell of 480 kHz subcarrier spacing and/or 960 kHz subcarrier spacing in the inter-band CA (inter-band CA in which slots are arranged and SFNs are partially arranged) between carriers whose frame boundaries are different.
In this case, the terminal 20 may perform an operation described in an embodiment 2 described below.
According to an embodiment of the present invention, in a case where there is a difference between the frame boundaries of the scheduling cell and the scheduled cell, the terminal 20 determines whether or not scheduling of a signal of the scheduled cell via PDCCH is valid, based on whether or not the scheduling cell or the scheduled cell has a specified subcarrier spacing (for example, 480 kHz and/or 960 kHz) or a specified frequency band (for example, FR2-2).
Accordingly, whether or not the terminal 20 supports cross-carrier scheduling between carriers whose frame boundaries are different in the high frequency band can be clarified.

(Embodiment 2)

In this embodiment, an example will be described in which the terminal 20 supports cross-carrier scheduling between carriers whose frame boundaries are different.

(Embodiment 2-1)

An example will be described in which a set of values for 480 kHz subcarrier spacing and/or 960 kHz subcarrier spacing in order to configure a slot offset between the scheduling cell and the scheduled cell is defined.

<Option 1>

The set of values may be defined as described in one of the following ways.

<Option 1-1>

The set of values is defined as a slot offset value (ca-SlotOffset) included in the RRC parameter (ServingCell-Config).

<Option 1-2>

The set of values is defined as a new RRC parameter.

<Option 2>

The value candidates may be one of the following.

<Option 2-1>

The value candidates may be values obtained by multiplying values for the 120 kHz subcarrier spacing by four. For example, the value candidates may be defined for the 480 kHz subcarrier spacing.

<Option 2-2>

The value candidates may be values obtained by multiplying values for the 120 kHz subcarrier spacing by eight. For example, the value candidates may be defined for the 960 kHz subcarrier spacing.

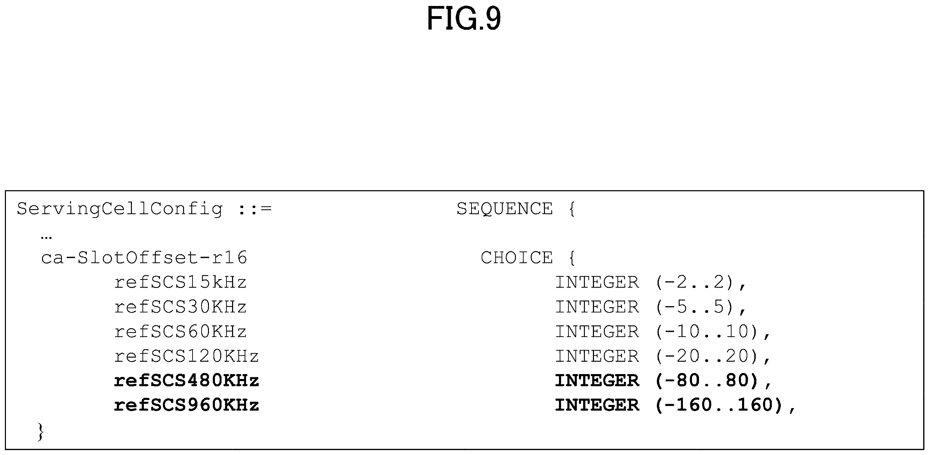

Fig. 9 is a drawing illustrating an example of RRC parameters related to an embodiment 2-1 of the present invention. For example, in a case where the subcarrier spacing is 480 kHz, the terminal 20 assumes that the slot offset value (ca-SlotOffset) is to be selected by the base station 10 from among the integer values from -80 to 80. In addition, in a case where the subcarrier spacing is 960 kHz, the terminal 20 assumes that the slot offset value (ca-SlotOffset) is to be selected by the base station 10 from among the integer values from -160 to 160.

(Embodiment 2-2)

An example will be described in which values for the existing other subcarrier spacings are reused as values for the 480 kHz subcarrier spacing and/or 960 kHz subcarrier spacing in order to configure a slot offset between the scheduling cell and the scheduled cell.

<Option 1>

The existing other subcarrier spacings may be one of the following.

<Option 1-1>

The existing other subcarrier spacings may be 120 kHz.

<Option 1-2>

The existing other subcarrier spacings may be one of 15/30/60 kHz.

<Option 2>

The method of reusing the values may be one of the following.

<Option 2-1>

The exactly same set of values may be reused. For example, the values configured for the 120 kHz subcarrier spacing (that is, values from -20 to 20) are used as is as the values for the 480 kHz subcarrier spacing and/or 960 kHz subcarrier spacing.

<Option 2-2>

The existing values may be reinterpreted based on the subcarrier spacing difference. For example, in a case of the 480 kHz subcarrier spacing, values that are obtained by multiplying the values configured for the 120 kHz subcarrier spacing by four are used. In addition, in a case of the 960 kHz subcarrier spacing, values that are obtained by multiplying the values configured for the 120 kHz subcarrier spacing by eight are used.

(Embodiment 2-3)

An example will be described in which values configured for the subcarrier spacings that are equal to or greater than 480 kHz in order to configure a slot offset between the scheduling cell and the scheduled cell are defined by using the formulas.

With respect to the formulas, for example, in a case where the subcarrier spacing is $15 \times 2^{\mu}$(kHz), the slot offset value may be a value from $-5 \times 2^{\mu-1}$ to $5 \times 2^{\mu-1}$. Alternatively, the slot offset value may be a value from $-2.5 \times 2^{\mu}$ to $2.5 \times 2^{\mu}$.

<Option 1>

The range of $\mu$ for applying the formulas may be one of the following.

<Option 1-1>

The formulas may be applied in a case where $\mu$ is equal to or greater than 5. That is, the formulas are applied in a case where the subcarrier spacing is equal to or greater than 480 kHz.

<Option 1-2>

The formulas may be applied in a case where $\mu$ is equal to or greater than 4. That is, the formulas are applied in a case where the subcarrier spacing is equal to or greater than 240 kHz.

<Option 1-3>

The formulas may be applied in a case where $\mu$ is equal to or greater than 0. That is, the formulas are applied in a case where the subcarrier spacing is equal to or greater than 15 kHz. With respect to the above, decimal places are rounded down.

According to an embodiment of the present invention, the terminal 20 assumes that the slot offset value (ca-SlotOffset) is configured for the specified subcarrier spacing (for example, 480 kHz and/or 960 kHz) According to the above-described configuration, the cross-carrier scheduling between carriers whose frame boundaries are different can be achieved.

In each of the above-described embodiments, as described above, the capability information (terminal capability information) may include information indicating whether or not a function described in an embodiment 1 or embodiment 2 is supported.

The subcarrier spacing in the above-described embodiments (480 kHz and/or 960 kHz) is an example of the large subcarrier spacing and may be another subcarrier spacing. In addition, FR2-2 in each of the above-described embodiments is an example of a high frequency band, and may be another band.

(Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only proposed functions in one of the embodiments.

<Base station 10>

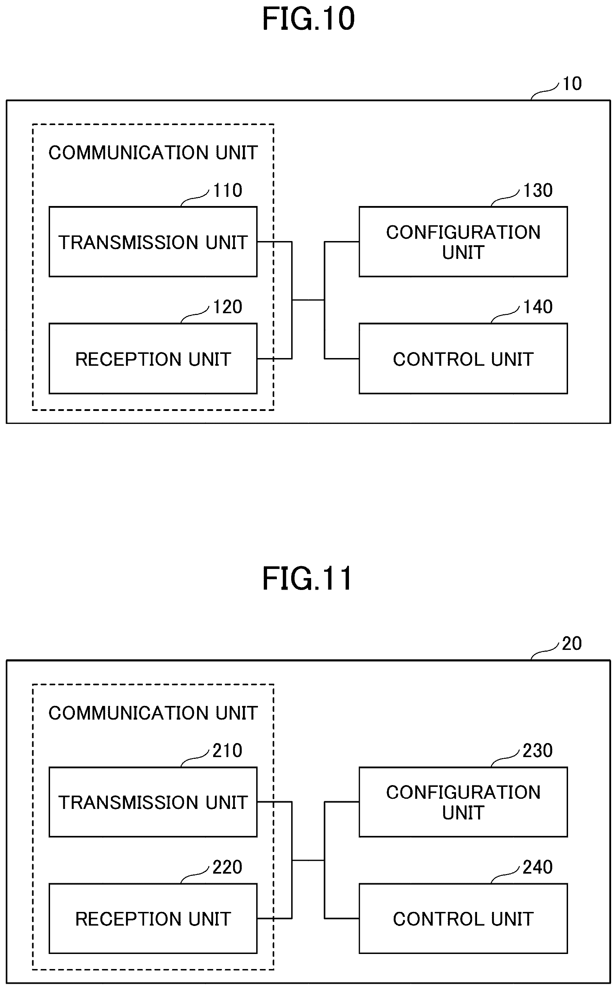

Fig. 10 is a drawing illustrating an example of a functional configuration of the base station. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 controls the entire base station 10 including, for example, control of signal transmission and reception. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

<Terminal 20>

Fig. 11 is a drawing illustrating an example of a functional configuration of the terminal. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20 including control related to signal transmission and reception. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

The terminal or base station according to an embodiment of the present invention may be configured as a terminal or a base station described in the following paragraphs. In addition, a communication method below may be performed.

<Configuration related to an embodiment of the present invention> (First item)

A terminal including:

a reception unit configured to receive, in a first cell, a downlink control channel including information for scheduling a signal of a second cell that is different from the first cell; and

a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

(Second item)

The terminal as described in the first item, wherein
the specified subcarrier spacing or frequency band is a subcarrier spacing that is equal to or greater than 480 kHz or a frequency band of FR2-2.

(Third item)

The terminal as described in the first item or second item, wherein

the reception unit further receives information indicating an offset value corresponding to the difference between the frame boundaries of the first cell and the second cell, and
the control unit assumes that the offset value is configured for the specified subcarrier spacing.

(Fourth item)

A base station including:

a reception unit configured to transmit, in a first cell, a downlink control channel including information for scheduling a signal of a second cell that is different from the first cell to a terminal; and
a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

(Fifth item)

A communication method performed by a terminal, the communication method including:

receiving, in a first cell, a downlink control channel including information for scheduling a signal of a second cell that is different from the first cell; and
determining whether or not the scheduling of the signal of the second cell is valid, based on whether or not the first cell or the second cell has a specified subcarrier spacing or frequency band in a case where there is a difference between frame boundaries of the first cell and the second cell.

According to any one of the above-described configurations, a technique is provided that enables a wireless communication system to be applied to a high frequency band. According to the second item, whether or not the scheduling of the signal of the second cell by the downlink control channel is valid can be determined based on whether or not the subcarrier spacing is equal to or greater than 480 kHz or whether or not the frequency band is FR2-2. According to the third item, the offset value corresponding to the frame boundaries can be assumed to be configured for the specified subcarrier spacing.

(Hardware structure)

In the above block diagrams used for describing an embodiment of the present invention (Fig. 10 and Fig. 11), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

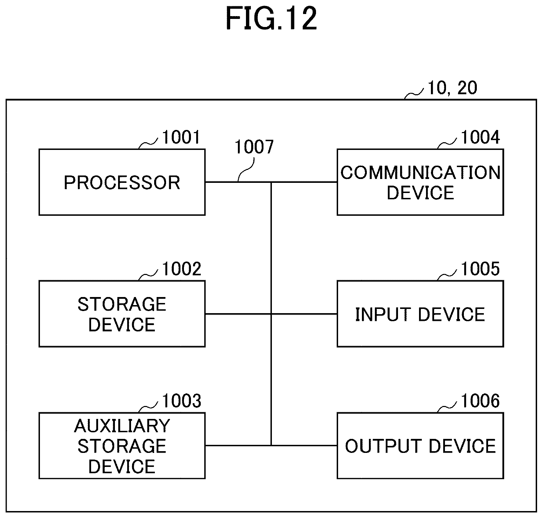

For example, the base station 10, the terminal 20, etc., according to an embodiment of the present disclosure may function as a computer for processing the radio communication method of the present disclosure. Fig. 12 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 10 may be realized by control programs that are stored in the storage device 1002 and are executed by the processor 1001. Further, for example, the control unit 240 of the terminal 20 illustrated in Fig. 11 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

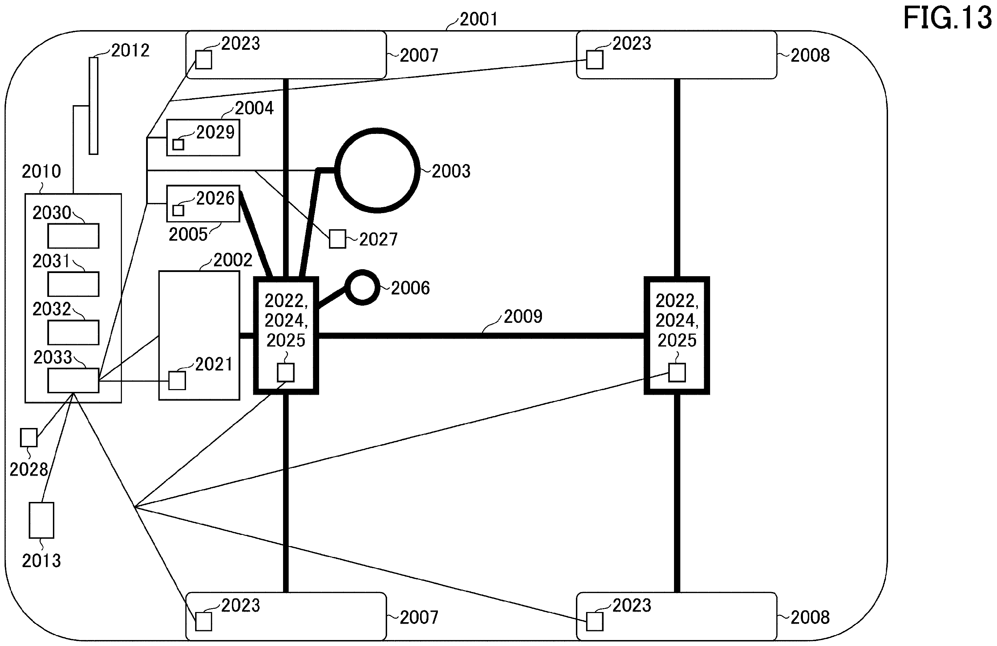

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/-Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

    10 Base station
    110 Transmission unit
    120 Reception unit
    130 Configuration unit
    140 Control unit
    20 Terminal
    210 Transmission unit
    220 Reception unit
    230 Configuration unit
    240 Control unit
    1001 Processor
    1002 Storage device
    1003 Auxiliary storage device
    1004 Communication device
    1005 Input device

1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

**Claims**

1. A terminal comprising:

   a reception unit configured to receive, in a first cell, a downlink control channel including information for scheduling a signal of a second cell that is different from the first cell; and
   a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

2. The terminal as claimed in claim 1, wherein
   the specified subcarrier spacing or frequency band is a subcarrier spacing that is equal to or greater than 480 kHz or a frequency band of FR2-2.

3. The terminal as claimed in claim 1 or claim 2, wherein

   the reception unit further receives information indicating an offset value corresponding to the difference between the frame boundaries of the first cell and the second cell, and
   the control unit assumes that the offset value is configured for the specified subcarrier spacing.

4. A base station comprising:

   a reception unit configured to transmit, in a first cell, a downlink control channel including information for scheduling a signal of a second cell that is different from the first cell to a terminal; and
   a control unit configured to determine whether or not the scheduling of the signal of the second cell is valid, based on whether or not the first cell or the second cell has a specified subcarrier spacing or frequency band in a case where there is a difference between frame boundaries of the first cell and the second cell.

5. A communication method performed by a terminal, the communication method comprising:

**EP 4 478 816 A1**

receiving, in a first cell, a downlink control channel including information for scheduling a signal of a second cell that is different from the first cell; and

determining whether or not the scheduling of the signal of the second cell is valid, based on whether or not the first cell or the second cell has a specified subcarrier spacing or frequency band in a case where there is a difference between frame boundaries of the first cell and the second cell.

# FIG.1

EP 4 478 816 A1

# FIG.2

CORE NETWORK ~40

MN ~10A

SN ~10B

UE ~20

# FIG.3

EP 4 478 816 A1

FR1
{15, 30, 60} kHz SCS
5~100 MHz BW

FR2-1
{60, 120, (240)}
kHz SCS
50~400 MHz BW

FR2-2
52.6 GHz-71 GHz

FREQUENCY

0.41
GHz

1 GHz

7.125
GHz

10 GHz

24.25
GHz

52.6
GHz

71
GHz

100
GHz

FIG.4

CC#z (SCell)

CC#y (SCell)

CC#x (P(S)Cell)

PDCCH → PDSCH/ PUSCH

PDCCH → PDSCH/ PUSCH

PDCCH → PDSCH/ PUSCH

PDCCH → PDSCH/ PUSCH

Cross carrier scheduling (SCell→P(S)Cell)

PDCCH → PDSCH/ PUSCH

Time

# FIG.5

Frame boundary
Slot#0

Band X (PCell) | D | S | U | D | D | ‥‥‥ → time

Band Y (SCell) | D | S | D | S | D | S | D | S | D | S

#0          #4

Frame boundary

# FIG.6

Slot offset
Slot#0

Band X (PCell) | D | S | U | D | D | ‥‥‥ → time

Band Y (SCell) | D | S | D | S | D | S | D | S | D | S

#0          #4

# FIG.7

# FIG.8

EP 4 478 816 A1

```
ServingCellConfig ::=                   SEQUENCE {
    ...
    ca-SlotOffset-r16                   CHOICE {
        refSCS15kHz                         INTEGER (-2..2),
        refSCS30KHz                         INTEGER (-5..5),
        refSCS60KHz                         INTEGER (-10..10),
        refSCS120KHz                        INTEGER (-20..20)
    }
}
```

# FIG.9

```
ServingCellConfig ::=              SEQUENCE {
  ...
  ca-SlotOffset-r16                 CHOICE {
      refSCS15kHz                       INTEGER (-2..2),
      refSCS30KHz                       INTEGER (-5..5),
      refSCS60KHz                       INTEGER (-10..10),
      refSCS120KHz                      INTEGER (-20..20),
      refSCS480KHz                      INTEGER (-80..80),
      refSCS960KHz                      INTEGER (-160..160),
  }
}
```

EP 4 478 816 A1

# FIG.10

# FIG.11

# FIG.12

~10, 20

~1001
**PROCESSOR**

1007

~1004
**COMMUNICATION DEVICE**

~1002
**STORAGE DEVICE**

~1005
**INPUT DEVICE**

~1003
**AUXILIARY STORAGE DEVICE**

~1006
**OUTPUT DEVICE**

FIG.13

EP 4 478 816 A1

## INTERNATIONAL SEARCH REPORT

| International application No. |
|---|
| **PCT/JP2022/005512** |

**A.    CLASSIFICATION OF SUBJECT MATTER**

*H04W 72/12*(2009.01)i; *H04W 72/04*(2009.01)i
FI:    H04W72/12; H04W72/04 111

According to International Patent Classification (IPC) or to both national classification and IPC

**B.    FIELDS SEARCHED**

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | INTEL CORPORATION. Discussion on PDCCH monitoring enhancements for extending NR up to 71 GHz[online]. 3GPP TSG RAN WG1 #107b-e R1-2200367. 11 January 2022, [retrieval date 12 September 2022], Internet<URL:https://www.3gpp.org/ftp/tsg_ran/WG1_RL1/TSGR1_107b-e/Docs/R1-2200367.zip> <br> p. 12 | 1-5 |
| A | RAN WG1. LS on updated Rel-17 RAN1 UE features list for NR[online]. 3GPP TSG RAN WG2 #117-e R2-2202113. 08 February 2022, [retrieval date 12 September 2022], Internet<URL:https://www.3gpp.org/ftp/tsg_ran/WG2_RL2/TSGR2_117-e/Docs/R2-2202113.zip> <br> p. 55, index 34-2 | 1-5 |
| A | WO 2021/157093 A1 (NTT DOCOMO INC) 12 August 2021 (2021-08-12) <br> paragraphs [0054]-[0060] | 1-5 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 September 2022** | **27 September 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/005512**

| Patent document cited in search report | Publication date (day/month/year) | Patent family member(s) | Publication date (day/month/year) |
|---|---|---|---|
| WO 2021/157093 A1 | 12 August 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.6.0*, June 2021
- *3GPP TS 38.306 V16.5.0*, June 2021